Europäisches Patentamt

European Patent Office

Office européen des brevets

(11) Veröffentlichungsnummer: **0 365 796**
**A2**

## (12) EUROPÄISCHE PATENTANMELDUNG

(21) Anmeldenummer: 89116340.4

(51) Int. Cl.⁵: **B23B 51/00**

(22) Anmeldetag: 05.09.89

(30) Priorität: 27.10.88 DE 3836548

(43) Veröffentlichungstag der Anmeldung:
02.05.90 Patentblatt 90/18

(84) Benannte Vertragsstaaten:
AT BE CH DE ES FR GB GR IT LI NL SE

(71) Anmelder: fischerwerke Artur Fischer GmbH
& Co. KG
Weinhalde 14 - 18
D-7244 Waldachtal 3/Tumlingen(DE)

(72) Erfinder: Fischer, Artur, Prof. Dr. h.c.
Weinhalde 34
D-7244 Waldachtal 3/Tumlingen(DE)

(74) Vertreter: Ott, Elmar, Dipl.-Ing. et al
fischerwerke Artur Fischer GmbH & Co KG
Weinhalde 14-18
D-7244 Waldachtal 3/Tumlingen(DE)

(54) Bohrvorrichtung zur Herstellung von Bohrlöchern mit Hinterschneidung.

(57) Es sind Bohrvorrichtungen zur Herstellung von hinterschnittenen Bohrlöchern bekannt, die eine konische Ausformung aufweisen.

Zur Sicherung der Bohrlochmündung vor Beschädigungen sowie zur Erleichterung des Ausschwenkens bei der Ausführung der Schwenkbewegungen zur Herstellung hinterschnittener Bohrlöcher ist am Bohrschaft ein an dessen Unterseite konkav ausgebildeter Anschlagbund angebracht, der in einer Anschlaghülse einliegt und an dessen Oberkante durch einen Federring gesichert ist.

EP 0 365 796 A2

## Bohrvorrichtung zur Herstellung von Bohrlöchern mit Hinterschneidung (Zusatzanmeldung zu Patentanmeldung, Aktenzeichen P 38 28 982.2)

Die Erfindung betrifft eine Bohrvorrichtung gemäß der Gattung des Hauptanspruchs.

Es sind Bohrvorrichtungen bekannt, mit denen Bohrlöcher erstellt werden können, die im Bereich des Bohrlochgrundes mit einer Hinterschneidung versehen werden. Die Hinterschneidung wird mittels eines einen verbreiterten Bohrkopf aufweisenden Bohrers durch eine Schwenkbewegung erzielt. In ein solches Bohrloch mit Hinterschneidung kann dann ein Spreizdübel eingesetzt werden, der mit einem aufweitbaren Spreizteil formschlüssig in die Hinterschneidung eingreift.

Aus der DE-OS 33 40 090 ist eine Bohrvorrichtung zur Herstellung eines Bohrloches mit Hinterschneidung bekannt. Aufgrund der beim Bohrvorgang ausgeführten Schwenkbewegungen kommt es jedoch oftmals zu Beschädigungen der Bohrlochmündung sowie zu Verklemmungen der mit einem verhältnismäßig großem Spiel in einer Hülse geführten Bohrvorrichtung.

Der Erfindung liegt daher die Aufgabe zugrunde, eine Bohrvorrichtung zur Herstellung von hinterschnittenen Bohlöchern zu schaffen, bei der ein Verklemmen während des Ausschwenkvorgangs verhindert und Beschädigungen im Bereich der Bohrlochmündung vermieden werden können.

Die Lösung dieser Aufgabe wird bei einer Bohrvorrichtung der eingangs genannten Gattung durch die im kennzeichnenden Teil der Hauptanspruchs angegebenen Merkmale erhalten.

Da der Bohrschaft und der daran ausgebildete Anschlagsbund lose im Bereich der Anschlaghülse gehalten sind, wird erreicht, daß die Lagerhülse sich bei Anlage im Bereich der Bohrlochmündung an der Wand eines Mauerwerks nicht mitdreht und somit auch nicht durch Reibung die Wand im Bereich der Bohrlochmündung beschädigt wird. Der an der Oberseite des Anschlagbundes befindliche Federring dient dabei als Sicherungsring zur axialen Fixierung der Anschlaghülse.

Dadurch, daß die Anschlaghülse aus gehärtetem, dünnwandigem Stahl besteht, ist ein stabiler Anschlag bei der Anlage am Mauerwerk gewährleistet. Die im Verlauf des Bohrvorganges ausgeführten Schwenkbewegungen werden jedoch trotz des stabilen Anschlages nicht behindert.

Die konkave Ausbildung des Anschlagbundes an seiner Unterseite trägt im wesentlichen dazu bei, daß die während des Bohrvorganges aufgetretenen Reibungen vermindert werden.

Die an der Unterseite im Bereich der unteren Öffnung verlaufende Aussparung trägt ebenfalls zu einem leichteren Ausschwenken während des Bohrvorganges bei und erleichtert die Abführung des angefallenen Bohrmehls.

Der um die Oberkante des Anschlagbundes geführte und in die Anschlaghülse eingespannte Federring bewirkt die Sicherung des Anschlagbundes im Bereich der oberen Öffnung der Anschlaghülse.

Die Erfindung wird nachfolgend anhand der Zeichnung näher erläutert.

Es zeigt:

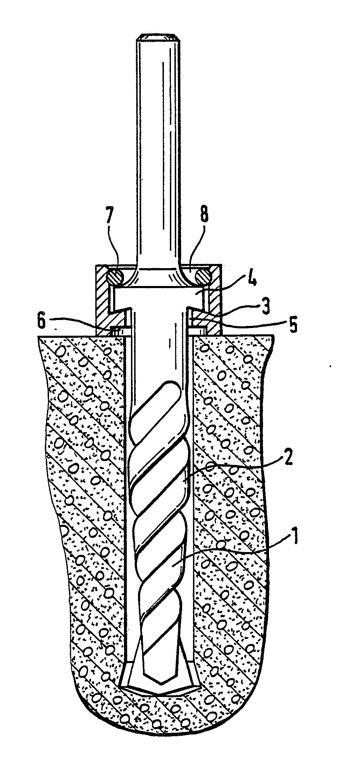

Figur 1 eine erfindungsgemäße Bohrvorrichtung in einem Bohrloch mit Hinterschneidung.

In Figur 1 ist eine Bohrvorrichtung dargestellt, die aus einem Bohrschaft 1 besteht, der eine Auswölbung 2 aufweist, die als Schwenklager bei der Herstellung einer Hinterschneidung dient. Der Bohrschaft 1 ist im Bereich der Bohrlochmündung durch eine Anschlaghülse 3 geführt. An seinem im Bereich der Anschlaghülse 3 befindlichen Teil weist der Bohrschaft 1 einen Anschlagbund 4 auf, der an dessen Unterseite konkav ausgebildet ist. Im Bereich der dem Bohrloch zugewandten Öffnung 5 der Anschlaghülse 3 weist diese eine um den Bohrschaft 1 verlaufende Aussparung 6 auf. Im Bereich der Oberkante des Anschlagbundes 4 ist um den Bohrschaft 1 ein Federring 7 in die Anschlaghülse 3 eingespannt und sichert damit den Anschlagbund 4 an der oberen Öffnung 8 der Anschlaghülse 3 ab.

## Ansprüche

1. Bohrvorrichtung zur Herstellung von Bohrlöchern mit Hinterschneidung mit einem mittels einer Bohreraufnahme in eine Bohrmaschine einsetzbaren Bohrwerkzeug, an dessen der Bohreraufnahme entgegengesetzten Stirnseite des Bohrschaftes sich ein Bohrkopf mit einer Bohrplatte befindet nach Patent... (Patentanmeldung P 38 28 982.2) **dadurch gekennzeichnet,** daß am Bohrschaft (1) eine topfförmige Anschlaghülse (3) befindlich ist, durch deren untere, dem Bohrkopf zugewandte Öffnung (5) der Bohrschaft (1) geführt ist, an dem innerhalb der Anschlaghülse (3) ein Anschlagbund (4) ausgebildet ist, der gegen die obere Öffnung (8) der Anschlaghülse (3) mittels eines Federringes (7) gesichert ist.

2. Bohrvorrichtung nach Anspruch 1, **dadurch gekennzeichnet,** daß die Anschlaghülse (3) aus gehärtetem, dünnwandigem Stahl besteht.

3. Bohrvorrichtung nach Anspruch 1, **dadurch gekennzeichnet,** daß der Anschlagbund (4) an seiner zur unteren Öffnung (5) der Anschlaghülse (3) gelegenen Seite konkav ausgebildet ist.

4. Bohrvorrichtung nach Anspruch 1 oder 2, **dadurch gekennzeichnet**, daß die Anschlaghülse (3) eine im Bereich ihrer unteren Öffnung (5) verlaufende Aussparung (6) aufweist.

5. Bohrvorrichtung nach Anspruch 1, **dadurch gekennzeichnet**, daß der Federring (7) in die Anschlaghülse (3) eingespannt ist.